# EUROPEAN PATENT APPLICATION

(11) **EP 1 582 383 A1**
(43) Date of publication of application: **05.10.2005**
(21) Application number: 05006886.5
(22) Date of filing: 30.03.2005
(51) Int. Cl.: B60G 17/015, B60G 17/02, B60G 15/06, B60G 13/14, F16F 15/03

(54) **Shock absorber with variable damping effect, particularly for vehicles**

(30) Priority: 31.03.2004 IT ge20040025
(71) Applicant: CALZOLARI, Emanuele, (Prov. of Genova) (IT); CALZOLARI, Renato, 16038 Santa Margherita Ligure (Prov. of Genova) (IT)
(72) Inventor: CALZOLARI, Emanuele, (Prov. of Genova) (IT); CALZOLARI, Renato, 16038 Santa Margherita Ligure (Prov. of Genova) (IT)
(74) Representative: Modiano, Guido

(57) **Abstract**

The present invention relates to a shock absorber (1a) with variable damping effect, particularly for vehicles. The shock absorber comprises a first element (2a) and a second element (3a), which is connected to the first element (2a) and can move with respect to the first element (2a), and elements for dissipating the kinetic energy of the second element (3a). In the shock absorber according to the invention, the dissipation elements comprise at least one electromagnetic brake (4a), in which the braking force can be altered appropriately in a simple and quick manner by varying the electrical power supply parameters.

## Description

The present invention relates to a shock absorber with variable damping effect, particularly for vehicles.

As is known, in a suspension, particularly of vehicles, the shock absorber is the element entrusted with the function of damping the vibrations produced by the motion of the vehicle on the road, which would inevitably be transmitted, through the elastic element of the suspension, from the wheels to the body and/or chassis of the vehicle.

In general, the function of a shock absorber is to dissipate the kinetic energy of a moving element by converting it into heat. In known types of shock absorbers, this dissipation function is generally achieved by mechanical friction between two mutually sliding elements, or hydraulically, or pneumatically, as a consequence of the flow, induced by the movement of one element with respect to another element of the shock absorber, of a liquid or gas through calibrated holes.

The behavior of the shock absorber, i.e., its capacity to dissipate kinetic energy more or less rapidly, determines, together with the behavior of the elastic element of the suspension, the so-called "trim" of the vehicle.

The need has always been felt to be able to vary in a simple manner the energy dissipation performed by the shock absorber so as to be able to vary the trim of a vehicle in order to adapt it to the different situations that can occur during use. In currently commercially available shock absorbers, the behavior of the shock absorber can be changed only by acting physically on the shock absorber in order to vary, for example, the size of the calibrated holes in pneumatic or hydraulic shock absorbers, or the friction force between the two mutually sliding elements of the shock absorber in the case of shock absorbers based on mechanical friction.

Moreover, in the case of racing vehicles, it is possible to vary the damping effect by varying, by means of a voltage applied to the fluid of the shock absorber, the density of such fluid.

These actions, besides requiring time, can be performed only by specialized personnel equipped with specific mechanical equipment and very often require the replacement of parts of the shock absorber in order to be able to achieve the intended effect.

Moreover, particularly in hydraulic or pneumatic shock absorbers, the behavior of the shock absorber is considerably influenced by the temperature.

The aim of the present invention is to solve the problem described above by providing a shock absorber in which it is possible to vary the damping action very simply and quickly.

Within this aim, an object of the invention is to provide a shock absorber in which the variation of the damping effect can be achieved also without having particular mechanical equipment available and without the intervention of specialized personnel.

Another object of the invention is to provide a shock absorber in which the damping effect can be changed even during its use.

This aim and these and other objects that will become better apparent hereinafter are achieved by a shock absorber with variable damping effect, particularly for vehicles, comprising a first element and a second element, which is connected to said first element and can move with respect thereto, means being provided for dissipating the kinetic energy of said second element, characterized in that said dissipation means comprise at least one electromagnetic brake, means for varying the braking force of said electromagnetic brake being further provided.

Further characteristics and advantages of the invention will become better apparent from the description of two preferred but not exclusive embodiments of the shock absorber according to the invention, illustrated by way of non-limiting example in the accompanying drawings, wherein:
Figure 1 is a schematic partially sectional front elevation view of the shock absorber according to the invention, in a first embodiment;
Figure 2 is a schematic partially sectional side elevation view of the shock absorber of Figure 1;

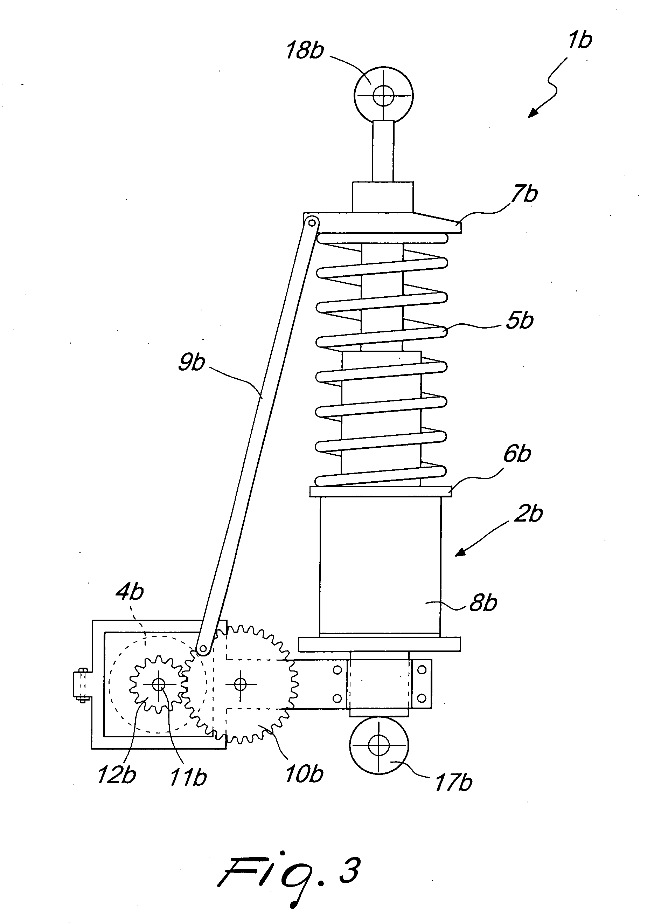

Figure 3 is a schematic front elevation view of the shock absorber according to the invention, in a second embodiment.

With reference to the figures, the shock absorber according to the invention, generally designated by the reference numerals 1a, 1b in the two embodiments, comprises a first element 2a, 2b and a second element 3a, 3b, which is connected to the first element 2a, 2b and can move with respect to the first element 2a, 2b. The shock absorber according to the invention is provided with means for dissipating the kinetic energy of the second element 3a, 3b, and, according to the invention, said dissipation means comprise at least one electromagnetic brake 4a, 4b, and means are provided for varying the braking force generated by the electromagnetic brake 4a, 4b.

As an electromagnetic brake provided with means for varying the braking force it is possible to use a DC electric motor, an AC electric motor, a brushless motor, a brushless servomotor, an integrated servomotor with high torque density, a step motor, a retarder brake, an alternator, an eddy current brake, a dynamo, an alternator or another element of the electromagnetic type in which it is possible to vary, in a per se known manner, the braking force for example by varying simply the electric power supply voltage and/or current, directly or by means of any kind of signal (DC or AC, with duty cycle variation, with PWM or other signal types).

Preferably, the shock absorber comprises an elastic element 5a, 5b, which is interposed between the first element 2a, 2b and the second element 3a, 3b. Such elastic element is adapted to contrast elastically the motion of the second element 3a, 3b with respect to the first element 2a, 2b in one direction and move the second element 3a, 3b with respect to the first element 2a, 2b in the opposite direction.

In the two illustrated preferred embodiments, the first element 2a, 2b is provided as a cylinder which has, starting from one of its axial ends, a substantially cylindrical cavity which accommodates, so that it can slide axially, the second element 3a, 3b, which is provided as a piston and protrudes, with a portion, from said axial end of the first element 2a, 2b.

Respective disk-like elements 6a, 6b and 7a, 7b are connected to the first element 2a, 2b and to the second element 3a, 3b and define two mutually opposite shoulders, between which the elastic element 5a, 5b is inserted; such elastic element is constituted, in the illustrated embodiments, by a helical spring, which is arranged coaxially around the first element 2a, 2b and the second element 3a, 3b.

Optionally, the position of at least one of the two disk-like elements 6a, 6b and 7a, 7b along the first element 2a, 2b or the second element 3a, 3b that supports it can be adjustable in a per se known manner, for example by means of a ring 8b, in order to vary the preloading of the elastic element 5a, 5b.

The electromagnetic brake can be of the linear type or, as shown, of the rotary type.

If a linear-type electromagnetic brake is used, in the two illustrated embodiments the brakeable element of the brake can be connected or linked directly to the second element 3a, 3b, or said second element 3a, 3b itself can be the brakeable element of the brake.

If instead an electromagnetic brake of the rotary type is used, in the two illustrated embodiments, in which the second element 3a, 3b can move with respect to the first element 2a, 2b, the second element 3a, 3b is connected kinematically to the brakeable element of the electromagnetic brake by way of transmission means, which convert the translational motion of the second element 3a, 3b into a rotary motion.

In the first embodiment, the second element 3a is connected to an electromagnetic brake of the rotary type by means of a rack 9a, rigidly coupled to the second element 3a and meshes with a pinion or toothed sector 10a, which is keyed on a shaft 11 a, which in turn rotates rigidly about its own axis with respect to the brakeable rotating element of the electromagnetic brake.

In the second embodiment, the second element 3b is connected to an electromagnetic brake of the rotary type by way of a linkage 9b, which is pivoted with one of its ends to the second element 3b and with its other end to a region that is spaced from the axis of a pinion or toothed sector 10b, which meshes with a pinion 12b that is keyed on a shaft 11b, which in turn rotates rigidly about its own axis with respect to the brakeable rotating element of the electromagnetic brake.

It should be noted that in the two illustrated embodiments the transmission means and the electromagnetic brake are arranged externally with respect to the first element 2a, 2b and the second element 3a, 3b, but these components of the shock absorber, according to the invention, can also be arranged inside the first element 2a, 2b and/or the second element 3a, 3b.

Depending on the requirements, the transmission means can be provided so as to increase or decrease the speed in the transmission of the motion from the second element 3a, 3b to the brakeable element of the electromagnetic brake, according to a preset transmission ratio.

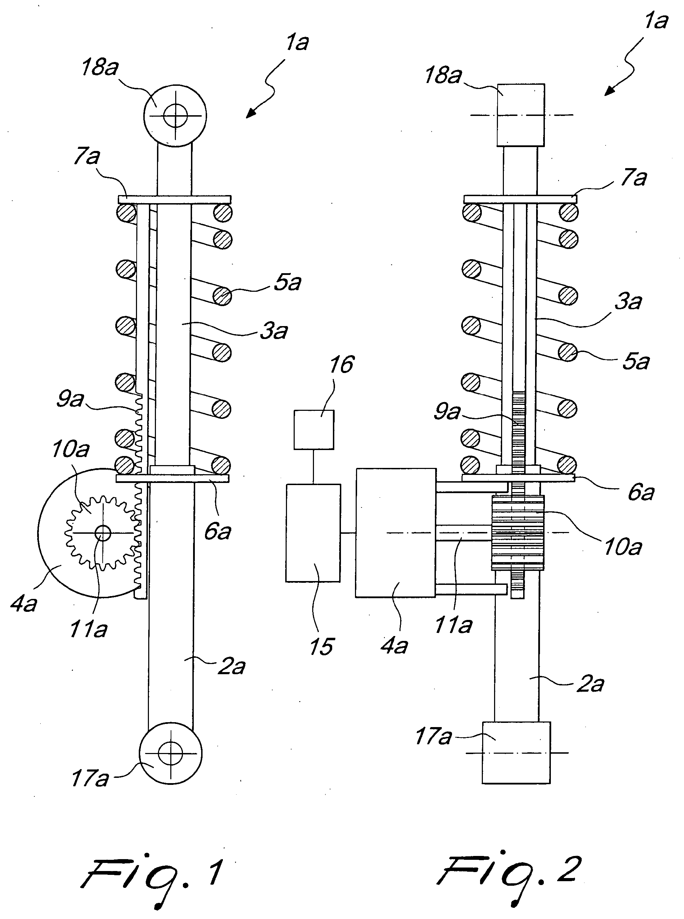

Preferably, as shown schematically in Figure 2 exclusively with reference to the first embodiment for the sake of simplicity, the means for varying the braking force of the electromagnetic brake comprise an actuation and control element 15 of the programmable electronic type, such as for example an electronic processor, which is functionally connected to the electromagnetic brake and is adapted to vary the voltage and/or current, shape, duration, intensity of the power supply and/or control signal of the electromagnetic brake according to at least one program which is preset in said actuation and control element 15 and according to preset braking parameters.

It is possible to generate a "map" (a set of data that the processor is capable of processing) of the damping function by means of electronic computing systems, and it is possible to program this map in order to correct the damping effect, for example in order to improve the safety of vehicles such as motorcycles or cars, if there is a loss of tire grip that causes an unwanted variation of the trim of the vehicle. It is therefore possible to vary the parameters of the damping action in order to adapt in an optimum manner the vehicle during braking, during acceleration, to climate and/or road variations (rain, sand, ice, uneven surface) and to the type of driver (weight, driving characteristics).

Moreover, with the shock absorber according to the invention it is possible to vary in real time the braking force of the electromagnetic brake 4a, 4b and therefore the damping effect of the shock absorber, as a function of information obtained by means of sensors for detecting the travel conditions of the vehicle, such as for example accelerometers, inclinometers, speed sensors, pressure sensors, braking sensors, wheel locking sensors, chain drive sensors, trim sensors, mechanical component sensors in general, suspension feedback sensors, sensors for controlling the fuel supply, the clutch, the gearbox, or other sensors, by telemetry. In practice, these sensors are functionally connected to the actuation and control element 15, which varies in real time the braking force of the electromagnetic brake 4a, 4b as a function of the values detected by these sensors.

Conveniently, the actuation and control element 15 is connected to a transceiver 16, for example a radio transceiver, which allows to vary the parameters and/or programs preset in the actuation and control element 15 even remotely, for example by means of a telephone link of the GSM type. In this manner, operation of the shock absorber according to the invention can be monitored constantly and the damping effect can be varied even remotely, for example by the supplier or by the company entrusted with providing technical support to the user of the shock absorber without requiring on-site intervention of specialized personnel.

The two described embodiments are based on the use of a single electromagnetic brake, but the shock absorber according to the invention can also comprise a plurality of electromagnetic brakes connected to the second element 3a, 3b and usable individually or in combination.

In particular, it is possible to provide two electromagnetic brakes, which can be actuated respectively in order to brake the motion of the second element 3a, 3b with respect to the first element 2a, 2b in one direction and brake the motion of the second element 3a, 3b with respect to the first element in the opposite direction.

In combination with the electromagnetic brake or brakes, the shock absorber according to the invention can comprise other means for dissipating the kinetic energy of the second element 3a, 3b of a known type, such as for example dissipation means of the hydraulic and/or pneumatic and/or mechanical type.

For the sake of completeness in description, it should be noted that the shock absorber has, at the opposite axial ends of the first element 2a, 2b and the second element 3a, 3b, suitable connections 17a, 17b, 18a, 18b in order to allow the connection of the shock absorber to the mechanical elements on which it is meant to act.

Operation of the shock absorber according to the invention is as follows.

During use, in the presence of a motion of the second element 3a, 3b with respect to the first element 2a, 2b, such motion is transmitted, through the rack 9a and the pinion 10a or the linkage 9b and the pinions 10b, 12b, to the brakeable element of the electromagnetic brake or brakes 4a, 4b. The electromagnetic brake or brakes 4a, 4b applies or apply a braking action that depends on the preset parameters (voltage and/or current, shape, duration, intensity of the power supply and/or control signal of the electromagnetic brake or brakes). By varying these parameters, which as mentioned not only requires no disassembly of the shock absorber but can even be performed remotely, it is possible to vary the braking action and therefore the damping action performed by the shock absorber.

In the exemplary embodiments described above, individual characteristics, given in relation to specific examples, may actually be interchanged with other different characteristics that exist in other examples of embodiments.

In practice it has been found that the shock absorber according to the invention fully achieves the intended aim, since it allows to vary the damping action very rapidly and even during operation without requiring any disassembly and without necessarily requiring the intervention of specialized personnel.

Although the shock absorber according to the invention has been devised in particular for vehicles, it can in any case be used advantageously for other applications, such as for example for machines intended for industrial production.

The shock absorber thus conceived is susceptible of numerous modifications and variations, all of which are within the scope of the inventive concept; all the details may further be replaced with other technically equivalent elements.

In practice, the materials used, as well as the dimensions, may be any according to requirements and to the state of the art.

The disclosures in Italian Patent Application no. GE2004A000025, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A shock absorber with variable damping effect, particularly for vehicles, comprising a first element and a second element, which is connected to said first element and can move with respect thereto, means being provided for dissipating the kinetic energy of said second element, **characterized in that** said dissipation means comprise at least one electromagnetic brake, means being provided for varying the braking force of said at least one electromagnetic brake.

2. The shock absorber according to claim 1, **characterized in that** said at least one electromagnetic brake is of the rotary type.

3. The shock absorber according to claim 1, **characterized in that** said at least one electromagnetic brake is of the linear type.

4. The shock absorber according to one or more of the preceding claims, **characterized in that** an elastic element is interposed between said first element and said second element and contrasts elastically the motion of said second element with respect to said first element in one direction.

5. The shock absorber according to claim 1, **characterized in that** said second element is associated slidingly with said first element along a direction of motion, said second element being connected kinematically, by way of transmission means, to the brakeable element of said at least one electromagnetic brake.

6. The shock absorber according to one or more of the preceding claims, **characterized in that** said at least one electromagnetic brake is arranged outside said first element and said second element.

7. The shock absorber according to one or more of the preceding claims, **characterized in that** said at least one electromagnetic brake is arranged inside said first element and/or said second element.

8. The shock absorber according to one or more of the preceding claims, **characterized in that** said means for varying the braking force of said at least one electromagnetic brake comprise an actuation and control element of the programmable electronic type, which is connected to said at least one electromagnetic brake and is adapted to vary the voltage and/or current, shape, duration, intensity of the power supply and/or control signal of said at least one electromagnetic brake according to at least one program that is preset in said actuation and control element and according to preset braking parameters.

9. The shock absorber according to one or more of the preceding claims, **characterized in that** said actuation and control element is connected to a transceiver for varying said parameters and/or said program remotely.

10. The shock absorber according to one or more of the preceding claims, **characterized in that** said at least one electromagnetic brake comprises at least two electromagnetic brakes, which can be actuated respectively in order to brake the motion of said second element with respect to said first element in one direction and to brake the motion of said second element with respect to said first element in the opposite direction.

11. The shock absorber according to one or more of the preceding claims, **characterized in that** said dissipation means comprise means for dissipating kinetic energy of the hydraulic and/or pneumatic and/or mechanical type.

12. The shock absorber according to one or more of the preceding claims, **characterized in that** it comprises sensors for detecting the travel conditions of the vehicle, which are functionally connected to said actuation and control element in order to vary in real time the braking force of said at least one electromagnetic brake as a function of the values detected by said sensors.
